# EUROPÄISCHE PATENTSCHRIFT

(11) **EP 4 631 758 B1**
(45) Veröffentlichungstag und Bekanntmachung des Hinweises auf die Patenterteilung: **04.11.2026**
(21) Anmeldenummer: 25162771.7
(22) Anmeldetag: 10.03.2025
(51) Int. Cl.: B60K 11/04, F01P 3/18

(54) **PERSONENKRAFTWAGEN MIT WÄRMETAUSCHERMODUL**
PASSENGER CAR WITH HEAT EXCHANGER MODULE
VÉHICULE AUTOMOBILE AVEC MODULE D'ÉCHANGEUR DE CHALEUR

(30) Priorität: 09.04.2024 DE 102024203242
(43) Veröffentlichungstag der Anmeldung: 15.10.2025
(73) Patentinhaber: VOLKSWAGEN AG, 38440 Wolfsburg (DE)
(72) Erfinder: Diedrich, Mathias, 38440 Wolfsburg (DE)

(56) Entgegenhaltungen:
- DE-A1- 10 347 136
- US-A- 6 059 019
- US-A1- 2004 226 683
- US-A1- 2008 230 291
- US-B2- 7 370 690
- US-B2- 7 398 847

## Beschreibung

Die Erfindung betrifft einen Personenwagen mit einem Wärmetauschermodul nach dem Oberbegriff des Anspruchs 1.

Aus dem Stand der Technik sind Personenkraftwagen mit einem Wärmetauschermodul bekannt. Wärmetauschermodule der in Rede stehenden Art weisen einen von einem Kühlmedium zur Kühlung eines Verbrennungsmotors des Personenkraftwagens durchströmbaren Wärmetauscher auf. Das Wärmetauschermodul kann darüber hinaus weitere Elemente des Personenkraftwagens, beispielsweise einen Lüfter zur Erzeugung eines den Wärmetauscher durchströmenden Luftstroms, umfassen. Die resultierenden Wärmetauschermodule werden typischerweise vorgefertigt und in dem Personenkraftwagen verbaut.

Eine Schwierigkeit ergibt sich bei modernen Personenkraftwagen insbesondere jedoch dann, wenn ein Zugang zu dem Wärmetauschermodul benötigt wird, insbesondere wenn das Wärmetauschermodul und/oder ein Bestandteil des Wärmetauschermoduls entfernt werden soll. Dies kann insbesondere zu Reparatur- und/oder Wartungszwecken notwendig werden.

Häufig kann die Montage des Wärmetauschermoduls problemlos erfolgen. Beispielsweise kann das Wärmetauschermodul Bestandteil eines separaten, von dem Rest des Personenkraftwagens vorgefertigten Kraftfahrzeug-Frontends sein, dass mit dem übrigen Personenkraftwagen verbunden wird. Der Zugang zu dem Wärmetauschermodul im Rahmen der Herstellung des Personenkraftwagens ist dann aufgrund der separaten Vormontage des Frontends unproblematisch. Bei dem fertigen Personenkraftwagen befindet sich dann jedoch der Verbrennungsmotor und/oder eine ganze Reihe weiterer Elemente des Personenkraftwagens unmittelbar hinter dem Wärmetauschermodul. Der Zugang, der im Rahmen der Herstellung noch problemlos möglich war, ist dann durch diese Elemente des Personenkraftwagens versperrt. Insbesondere Reparatur und/oder Wartungsarbeiten werden hierdurch signifikant erschwert.

Ein derartiges Wärmetauschermodul für einen Personenkraftwagen ist aus der Druckschrift JP 2022 119 501 A bekannt. Das Wärmetauschermodul ist mittels eines Modullagers in dem Personenkraftwagen befestigt. Die Montage des Moduls kann erfolgen, in dem das Modul zunächst im Bereich seiner Unterkante in dem Personenkraftwagen befestigt wird und sodann durch ein Verschwenken des Wärmetauschermoduls um eine horizontale Achse das Wärmetauschermodul in seine bestimmungsgemäße Gebrauchsposition gebracht wird. Wenn sich das Wärmetauschermodul in seiner Gebrauchsposition befindet, wird das Modullager an dem Personenkraftwagen fixiert.

Das Wärmetauschermodul ist infolge fest mit dem Personenkraftwagen verbunden. Eine Demontage gestaltet sich bei derartig in dem Personenkraftwagen aufgenommenen Wärmetauschermodulen jedoch dennoch schwierig, wenn weitere Elemente des Personenkraftwagens nach deren Einbau den Zugang zur Befestigung des Modullagers in dem Personenkraftwagen behindern.

Aus der US 7 398 847 B2 ist ein landwirtschaftliches Arbeitsfahrzeug bekannt, das über eine Wärmetauscheranordnung verfügt, bei der zwei Wärmetauscher so angeordnet sind, dass Flächenseiten des Wärmetauschers einander zugewandt sind und die flächigen Erstreckungsebenen der Wärmetauscher parallel orientiert sind. Um die einander zugewandten Flächen der Wärmetauscher zugänglich zu machen, beispielsweise für Wartungsarbeiten, insbesondere aber auch zu Reinigungszwecken, kann einer der Wärmetauscher mittels einer Schwenk-Schiebebewegung, die durch entsprechende Führungselemente geführt wird, von dem anderen Wärmetauscher wegbewegt werden. Hierdurch entsteht ein Freiraum zwischen den Wärmetauschern. Die Anordnung des Wärmetauschers an einem derartigen landwirtschaftlichen Fahrzeug unterscheidet sich jedoch grundlegend von der Anordnung eines Wärmetauschers in einem Personenkraftwagen.

Die US 2008/230291 zeigt eine Tragstruktur im vorderen Bereich eines Kraftfahrzeugs mit einem Tragrahmen, der auf der Rückseite durch eine Rückwand abgedeckt werden kann, die eine Lüfteröffnung aufweist. Es wird vorgeschlagen, dass ein Halterahmen zum Halten von Kühlkomponenten, insbesondere Wärmetauschern, in Fahrtrichtung vor dem Tragrahmen schwenkbar angeordnet ist.

Die DE 103 47 136 A1 zeigt eine Kühleranordnung die zumindest ein Kühlerelement zur Kühlung eines Mediums und zumindest ein Verankerungsorgan, das eine bewegliche Verankerung des Kühlerelements im Fahrzeug gestattet, umfasst.

Die US 6 059 019 A zeigt eine Wärmetauscherbaugruppe, die an einem Rahmen eines Fahrzeugs befestigt werden kann. Die Wärmetauscherbaugruppe umfasst einen ersten Wärmetauscher und einen zweiten Wärmetauscher, wobei der zweite Wärmetauscher separat vom ersten Wärmetauscher lösbar befestigt ist.

Die US 2004/0226683 A1 zeigt ein Kühlsystem für eine landwirtschaftliche Maschine.

Die US 7 370 690 B2 zeigt eine Vorrichtung zum Halten eines Wärmetauschers, wie beispielsweise eines Kondensators einer Klimaanlage in einem Fahrzeug, für eine Schwenkbewegung zwischen einer Betriebsposition und einer Position, die in einem Winkel zur Betriebsposition steht.

Aufgabe der vorliegenden Erfindung ist es, einen Personenkraftwagen mit einem Wärmetauschermodul aufzuzeigen, bei dem das Wärmetauschermodul im Personenkraftwagen, insbesondere zur Reparatur- und/oder Wartungszwecken, besser zugänglich ist.

Die Aufgabe wird gelöst durch einen Personenkraftwagen mit den Merkmalen des Anspruchs 1. Die Merkmale der unabhängigen Ansprüche betreffen vorteilhafte Ausführungsformen.

Unter einem Personenkraftwagen ist insbesondere ein mehrspuriges, für die Teilnahme am öffentlichen Straßenverkehr zugelassenes Fahrzeug mit eigenem Antrieb zu verstehen, dass zum vorwiegenden Zweck der Personenbeförderung bestimmt ist. Insbesondere handelt es sich um einen Personenkraftwagen, der einen im vorderen Drittel des Personenkraftwagens angeordneten Verbrennungsmotor aufweist. Der Wärmetauscher des Wärmetauschermoduls dient insbesondere zur Kühlung dieses Verbrennungsmotors.

Der Personenkraftwagen weist ein Wärmetauschermodul auf. Das Wärmetauschermodul umfasst wenigstens einen von einem Kühlmedium zur Kühlung eines Verbrennungsmotors des Personenkraftwagens durchströmbaren Wärmetauscher. Das Wärmetauschermodul ist insbesondere im Bereich der Front des Personenkraftwagens angeordnet.

Die Aufgabe wird insbesondere dadurch gelöst, dass das Wärmetauschermodul derart um eine horizontale Achse schwenkbar gelagert ist, dass das Wärmetauschermodul zwischen einer Gebrauchsposition und einer nicht-Gebrauchsposition hin und her geschwenkt werden kann.

Unter der Gebrauchsposition ist insbesondere die Position des Wärmetauschermoduls zu verstehen, in der sich das Wärmetauschermodul beim bestimmungsgemäßen Betrieb des Personenkraftwagens befindet. Das Wärmetauschermodul ist in der Gebrauchsposition insbesondere fixierbar. Unter dem Halten in der jeweiligen Position ist insbesondere zu verstehen, dass das Kühlermodul die jeweilige Position mit zumindest hinreichender Zuverlässigkeit beibehält. Dies bezieht sich in der Gebrauchsposition auf den bestimmungsgemäßen Betrieb des Fahrzeugs. Im Hinblick auf die Nichtgebrauchsposition ist unter einem Halten in der Nichtgebrauchsposition zu verstehen, dass das Wärmetauschermodul seine Nichtgebrauchsposition bei einem auf einer horizontalen ebenen Fläche ruhenden Personenkraftwagen beibehält, zumindest insoweit, von der Schwerkraft abgesehen, keine externen Kräfte auf das Wärmetauschermodule einwirken.

Das Wärmetauschermodul und/oder der Wärmetauscher weisen vorzugsweise eine flächige Erstreckung auf. Hierunter ist insbesondere zu verstehen, dass das Wärmetauschermodul und/oder der wenigstens eine Wärmetauscher entlang einer Dickenrichtung eine wesentlich geringere Abmessung aufweist als in seinen zu dieser Dickenrichtung rechtwinkligen flächigen Erstreckungsrichtung. Der wenigstens eine Wärmetauscher und/oder das Wärmetauschermodul erstreckt sich in der Gebrauchsposition insbesondere mit seiner Dickenrichtung parallel zur Längsrichtung des Personenkraftwagens, mit seiner Breitenrichtung parallel zur Breitenrichtung des Personenkraftwagens und mit seiner Hochrichtung parallel zur Hochrichtung des Personenkraftwagens. Das Wärmetauschermodul und/oder der wenigstens eine Wärmetauscher erstreckt sich in der Gebrauchsposition insbesondere in eine durch dessen Breitenrichtung und dessen Hochrichtung aufgespannten Ebene.

Das Wärmetauschermodul kann mittels eines Modullagers oberhalb der horizontalen Achse an einem Strukturelement des Personenkraftwagens befestigt sein. Mittels eines derartigen Modullagers kann insbesondere die Verschwenkbarkeit des Wärmetauschermoduls in vorteilhafter Weise realisiert werden. Dabei kann das Modullager dazu ausgebildet sein, das Wärmetauschermodul wahlweise in der Gebrauchsposition oder in der Nichtgebrauchsposition zu halten. Mittels eines so gestalteten Modullagers kann Funktion der Verschwenkbarkeit des Wärmetauschermoduls in einfacher Weise realisiert werden, ohne dass sich die Komplexität des sonstigen Aufbaus des Personenkraftwagens und insbesondere des Wärmetauschermoduls erhöht. Zur Realisierung der gewünschten Verschwenkbarkeit ist dann gegenüber bekannten Konstruktionen insbesondere lediglich die Verwendung eines speziell gestalteten Modullagers notwendig, was sich mit vergleichsweise geringen Kosten realisieren lässt.

Das Wärmetauschermodul kann mit einer Mehrzahl, insbesondere mit zwei, Modullagern oberhalb der horizontalen Achse an einem Strukturelement des Personenkraftwagens befestigt sein. Die Modullager sind dabei insbesondere beidseits des Wärmetauschermoduls angeordnet. Die Modullager befinden sich in Bezug auf die Hochrichtung des Kraftfahrzeugs insbesondere auf derselben Höhe.

Das Modullager kann ein erstes Modullagerelement und ein zweites Modullagerelement aufweisen. Das zweite Modullagerelement ist insbesondere relativ zum ersten Modullagerelement beweglich mit dem ersten Modullagerelement verbunden. Dabei kann das erste Modullagerelement an dem Wärmetauschermodul und das zweite Modullagerelement an einem Strukturelement des Personenkraftwagens befestigt sein. Mit anderen Worten können das erste Modullagerelement und das zweite Modullagerelement derart beweglich miteinander gekoppelt sein, dass das Verschwenken des Wärmetauschermoduls zwischen der Gebrauchsposition und der Nichtgebrauchsposition mit einer Relativbewegung der Modullagerelemente zueinander einhergehen kann. Mittels der Modullagerelemente lassen sich Modullager realisieren, die einen einfachen und kostengünstigen Aufbau aufweisen und dennoch die Verschwenkbarkeit des Wärmetauschermoduls ermöglichen können.

Bei dem Strukturelement kann es sich um einen Montageträger handeln. Unter einem Montageträger ist ein Strukturelement im Bereich des vorderen Endes bzw. der Front eines Personenkraftwagens zu verstehen. Das Strukturelement kann Bestandteil eines Frontend-Moduls sein, das bei der Herstellung des Personenkraftwagens zunächst separat vormontiert und dann mit der Karosserie des Personenkraftwagens verbunden wird. Ein Montageträger dient insbesondere dazu, Elemente des Personenkraftwagens, insbesondere Elemente des Frontend-Moduls an dem Montageträger zu befestigen. Dabei kann es sich bei diesen Elementen insbesondere um das Wärmetauschermodul handeln, an dem Montageträger können darüber hinaus insbesondere Beleuchtungselemente, beispielsweise Scheinwerfer, Verkleidungselemente, beispielsweise eine vordere Stoßfängerverkleidung und/oder ein Kühlergrill, und/oder funktionale Elemente, wie beispielsweise ein Haubenschloss zur Verriegelung einer Motorhaube des Personenkraftwagens, befestigt sein.

Das Strukturelement, insbesondere der Montageträger, kann das Wärmetauschermodul in dessen Gebrauchsposition rahmenartig umgeben. Eine derartige rahmenartige Gestaltung eines Strukturelements der in Rede stehenden Art ist im Hinblick auf den Aufbau des vorderen Bereichs des Personenkraftwagens vorteilhaft. Durch die Anordnung des Wärmetauschermoduls innerhalb des "Rahmens" lässt sich eine insgesamt gute Raumausnutzung im vorderen Bereich des Personenkraftwagens erreichen. Das rahmenartige Umgeben des Wärmetauschermoduls in dessen Gebrauchsposition schränkt dabei naturgemäß jedoch die Zugänglichkeit des Wärmetauschermoduls ein, weshalb bei einem derartig das Wärmetauschermodul rahmenartig umgebenen Strukturelement eine Verschwenkbarkeit in eine Nichtgebrauchsposition besonders vorteilhaft ist, da bereits durch das Verschwenken des Wärmetauschermoduls um einen vergleichsweise kleinen Winkel dieses, zumindest teilweise, aus dem Rahmen herausgeschwenkt und so zugänglich gemacht wird.

Bei der Nichtgebrauchsposition kann es sich insbesondere um eine Wartungs- und/oder Montageposition handeln. Mit anderen Worten kann es sich bei der Nichtgebrauchsposition insbesondere um eine Position handeln, in die das Wärmetauschermodul lediglich dann verschwenkt wird, wenn der Zugang zum Wärmetauschermodul zu Wartungs- und/oder Montagezwecken, beispielsweise im Rahmen einer notwendig werdenden Reparatur, benötigt wird.

Das Wärmetauschermodul kann in seiner Nichtgebrauchsposition um einen Winkel von wenigstens 3°, insbesondere wenigstens 5°, und/oder höchstens 10°, insbesondere höchstens 7°, gegenüber seiner Gebrauchsposition verschwenkt sein. Es hat sich gezeigt, dass bereits bei diesen verhältnismäßig geringen Winkeln der Zugang zu dem Wärmetauschermodul durch das Verschwenken signifikant verbessert wird.

Das Wärmetauschermodul kann in seiner Nichtgebrauchsposition insbesondere entgegen der Fahrtrichtung des Personenkraftwagens bei Vorwärtsfahrt gegenüber seiner Gebrauchsposition verschwenkt sein. Ein Verschwenken entgegen der Fahrtrichtung des Personenkraftwagens bei Vorwärtsfahrt bietet insbesondere den Vorteil, dass bei der Anordnung des Wärmetauschermoduls im Bereich des vorderen Endes des Personenkraftwagens, also insbesondere zwischen der Verkleidung der Front und dem Verbrennungsmotor des Personenkraftwagens, ein Zugang zum Wärmetauschermodul durch die Motorhaube üblicherweise in vorteilhafter Weise ermöglicht werden kann.

Eines der Modullagerelemente kann einen Endanschlag aufweisen, durch den die Nichtgebrauchsposition vorgegeben ist. Ein derartiger Endanschlag stellt eine einfache Möglichkeit dar, die Nichtgebrauchsposition vorzugeben und das Wärmetauscherelement in seiner Nichtgebrauchsposition zu halten. Dabei kann das andere Modullagerelement in der Nichtgebrauchsposition an dem Endanschlag insbesondere aufgrund des Eigengewichts des Wärmetauschermoduls anliegen. Ein derartiges Anliegen an dem Endanschlag aufgrund des Eigengewichts des Wärmetauschermoduls stellt eine einfache Möglichkeit dar, eine definierte Nichtgebrauchsposition vorzugeben und es hat sich im Zusammenhang mit der vorliegenden Erfindung gezeigt, dass eine derartige "Sicherung durch Eigengewicht" insbesondere für Wartungs-, Reparatur-, und/oder Montagezwecke regelmäßig ausreichend ist.

Eines der Modullagerelemente kann einen Schienenbereich aufweisen, auf dem das andere Modullagerelement verschieblich gelagert ist. Ein derartiger Schienenbereich ermöglicht es in einfacher Weise, die relative Beweglichkeit der Modullagerelemente zueinander zu realisieren. Insbesondere kann auch das Vorgeben der Nichtgebrauchsposition mittels eines Endanschlags in Verbindung mit einem Schienenbereich realisiert werden. In einem derartigen Modullager kann insbesondere der Endanschlag an einem Schienenbereich vorgesehen sein, so dass das auf dem Schienenbereich verschieblich gelagerte Modulelement in der Nichtgebrauchsposition an dem Endanschlag anliegen kann.

Der Schienenbereich kann insbesondere gekrümmt sein. Mittels eines gekrümmten Schienenbereichs lässt sich die Verschwenkbarkeit um eine horizontale Achse vorteilhaft realisieren. Hierbei kann die Krümmung und/oder die Lage des Schienenbereichs insbesondere derart gewählt sein, dass der Schienenbereich ein Kreisbogensegment beschreibt, dessen Mittelpunkt sich auf der horizontalen Achse befindet. So können auch dann, wenn das erste Modullagerelement und/oder das zweite Modullagerelement starr an dem Strukturelement und/oder dem Wärmetauschermodul befestigt ist, Relativbewegungen zwischen den Modullageelementen reibungsarm ermöglicht werden, da die durch das Schienenelement geführte Relativbewegung der Modullagerelemente der durch die horizontale Achse vorgegebenen Bewegungsbahn folgt.

Eines der Modullagerelemente kann ein Fixierelement umfassen, mit dem das Modullagerelement an dem anderen Modullagerelement in einer festen Position relativ zu dem anderen Modulelement fixiert werden kann, um das Wärmetauschermodul in seiner Gebrauchsposition zu sichern. Durch die Verwendung eines derartigen Fixierelements kann eine sichere Fixierung des Wärmetauschermoduls in seiner Gebrauchsposition erreicht werden. Eine sichere Fixierung des Wärmetauschermoduls in seiner Gebrauchsposition ist vor allem deswegen von Bedeutung, da bei dem bestimmungsgemäßen Betrieb des Personenkraftwagens nicht unerhebliche Kräfte, die sich insbesondere aus den Beschleunigungen und Verzögerungen des Personenkraftwagens ergeben, auf das Wärmetauscher Modul einwirken können.

Bei dem Fixierelement kann es sich insbesondere um eine Schraube handeln. Mittels einer Schraube lässt sich zuverlässig eine sichere Fixierung des Wärmetauschermoduls in seiner Gebrauchsposition herbeiführen. Der Aufwand zum Befestigen bzw. Lösen der Schraube tritt aufgrund der Tatsache, dass es sich beim Verschwenken des Wärmetauschermoduls in seine Nichtgebrauchsposition um keine alltägliche Maßnahme handelt, in den Hintergrund gegenüber der Tatsache, dass mittels einer Schraube mit hoher Zuverlässigkeit auch ein wiederholtes Lösen und Befestigen ermöglicht werden kann. Die Schraube kann in diesem Zusammenhang insbesondere verliersicher an einem der Modullagerelemente befestigt sein. Dies hat erhebliche Vorteile in der Praxis, da die Handhabung in der Werkstatt signifikant erleichtert wird.

Das Wärmetauschermodul umfasst eine Lüftereinheit. Eine derartige Lüftereinheit dient zur Erzeugung eines den wenigstens einen Wärmetauscher durchströmenden Luftstromes, der die Kühlleistung des Wärmetauschermoduls insbesondere dann signifikant verbessern kann, wenn der durch die Fahrbewegung des Personenkraftwagens erzeugte Luftstrom hierfür nicht ausreicht. Die Lüftereinheit kann in der Nichtgebrauchsposition in einer zur flächigen Erstreckung des Wärmetauschermoduls, zumindest im Wesentlichen, parallelen Richtung orientierten Bewegung aus dem Personenkraftwagen entfernt werden, wobei ein Entfernen durch eine zur flächigen Erstreckung des Wärmetauschermoduls, zumindest im Wesentlichen, parallelen Richtung orientierten Bewegung in der Gebrauchsposition durch im Bewegungsweg angeordnete Elemente des Personenkraftwagens verhindert ist. Auf diese Weise kann der einfache Ein- und Ausbau einer Lüftereinheit des Wärmetauschermoduls ermöglicht werden, ohne hierfür das vollständige Wärmetauschermodul zu demontieren oder andere Elemente aus dem Personenkraftwagen, die den Zugang zur Lüftereinheit behindern, zuvor zu entfernen. Das Entfernen der Lüftereinheit kann hierbei insbesondere in einer diagonal nach oben gerichteten Bewegung erfolgen.

Bei dem Element des Personenkraftwagens, das in der Gebrauchsposition im Bewegungsweg einer entsprechenden Bewegung zum Entfernen der Lüftereinheit angeordnet ist, kann es sich insbesondere um ein Strukturelement des Personenkraftwagens handeln. Insbesondere handelt es sich um einen Montageträger bzw. einen Bereich eines Montageträgers, der sich oberhalb des Wärmetauschermoduls in Fahrzeugquerrichtung erstreckt.

Weitere praktische Ausführungsformen der Erfindung sind nachfolgend im Zusammenhang mit den Zeichnungen beschrieben. Es zeigen:
- Fig. 1: ein beispielhaftes, an einem Strukturelement befestigtes Wärmetauschermodul eines beispielhaften Personenkraftwagens,
- Fig. 2: eine vereinfachte schematische Schnittdarstellung des an dem Strukturelement befestigten Wärmetauschermoduls aus Figur 1 in der Gebrauchsposition,
- Fig. 3: das an dem Strukturelement befestigte Wärmetauschermodul aus Figur 2 in der Nichtgebrauchsposition,
- Fig. 4: das an dem Strukturelement befestigte Wärmetauschermodul aus Figur 2 in der Nichtgebrauchsposition bei der Demontage einer Lüftereinheit des Wärmetauschermoduls,
- Fig. 5: eine Detailansicht eines Modullagers, mittels dem das Wärmetauschermodul in den Figuren 1 bis 4 an dem Strukturelement befestigt ist in der Gebrauchsposition,
- Fig. 6: das Modullager aus Figur 5 in der Nichtgebrauchsposition.

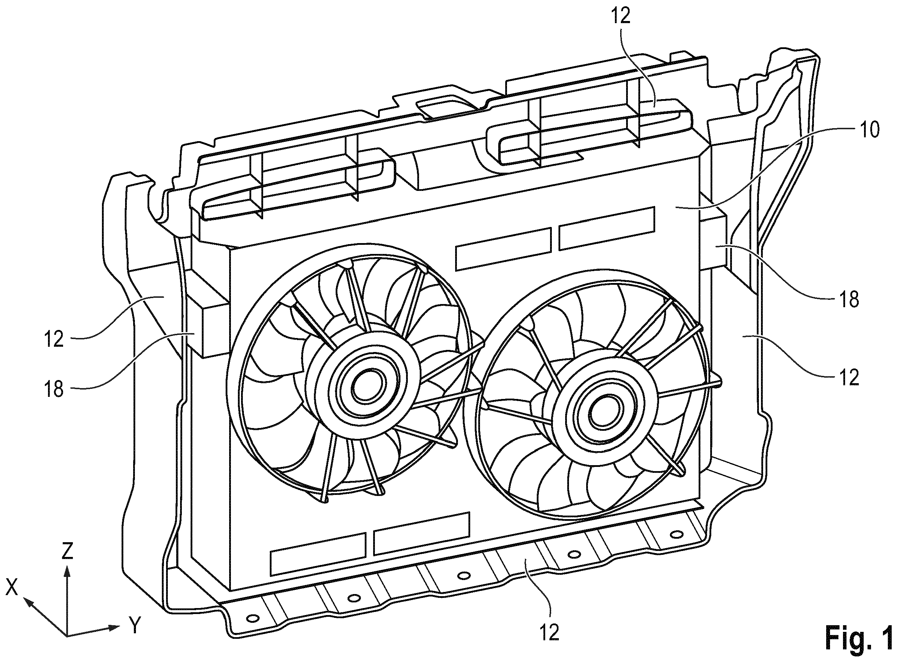

Der beispielhafte Personenkraftwagen weist das in den Figuren 1 bis 6 beispielhaft dargestellte Wärmetauschermodul 10 auf. Das Wärmetauschermodul 10 kann, wie es im gezeigten Beispiel in Figur 1 beispielhaft dargestellt ist, an einem Strukturelement 12 des Personenkraftwagens befestigt sein. Das Strukturelement 12 kann wie im gezeigten Beispiel das Wärmetauschermodul 10 rahmenartig umgeben. Wie beispielhaft dargestellt, kann es sich bei dem Strukturelement 12 um einen Montageträger handeln.

Die in den Figuren beispielhaft dargestellte Anordnung aus einem an einem Strukturelement 12 befestigten Wärmetauschermodul 10 kann insbesondere im Bereich des vorderen Endes des Personenkraftwagens angeordnet sein. Die in den Figuren beispielhaft dargestellte Anordnung aus einem an einem Strukturelement 12 befestigten Wärmetauschermodul 10 kann sich zwischen Verkleidungselementen, die die Front des Personenkraftwagen ausbilden, und einem Verbrennungsmotor des Personenkraftwagens befinden.

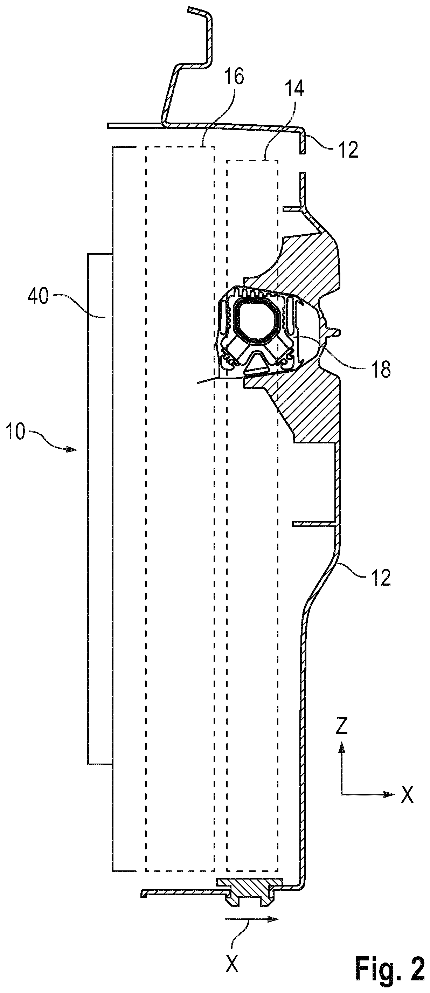

Das Wärmetauschermodul 10 weist wenigstens einen von einem Kühlmedium zur Kühlung eines Verbrennungsmotors des Personenkraftwagens durchströmbaren Wärmetauscher auf. Wie im gezeigten Beispiel kann das Wärmetauschermodul 10 eine Mehrzahl Wärmetauscher, beispielsweise wie dargestellt zwei Wärmetauscher 14 und 16 umfassen. Die Wärmetauscher 14, 16 können wie beispielhaft dargestellt entlang der Fahrzeuglängsrichtung X hintereinander angeordnet sein. Zur übersichtlicheren Darstellung sind die Wärmetauscher 14 und 16 in den Figuren 2 bis 4 lediglich in Gestalt ihrer Umrisse, die durch gestrichelte Linien wiedergegeben sind, dargestellt. Die Wärmetauscher 14 und/oder 16 und/oder das Wärmetauschermodul 10 können sich in einer zur Fahrzeuglängsrichtung X rechtwinkligen Ebene flächig erstrecken, wie es in den gezeigten Beispielen insbesondere in den Figuren 1 bis 4 dargestellt ist.

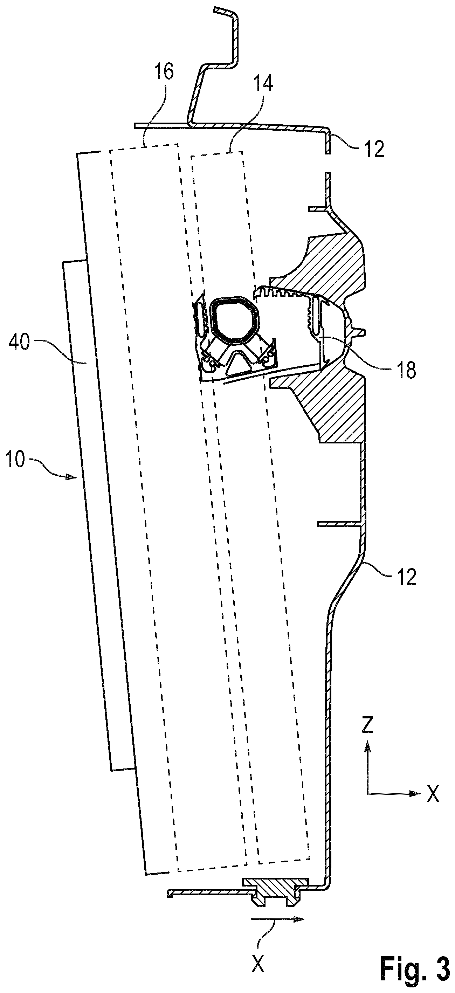

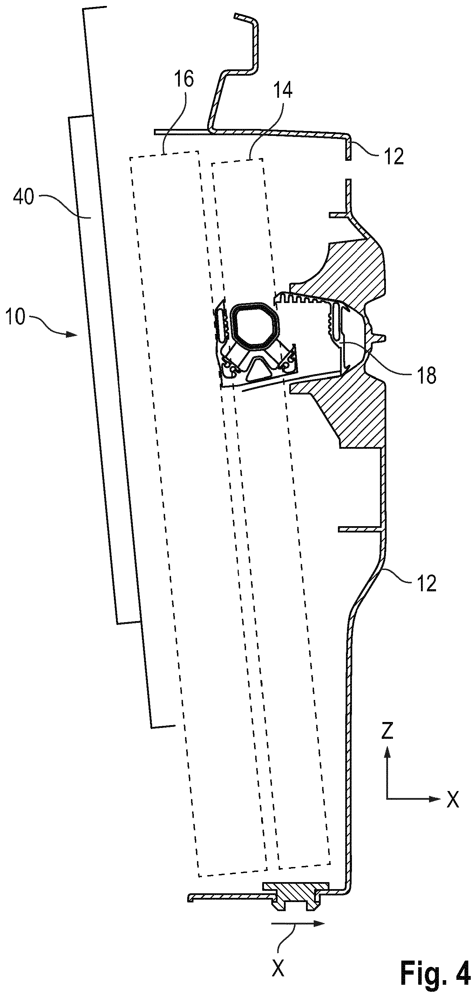

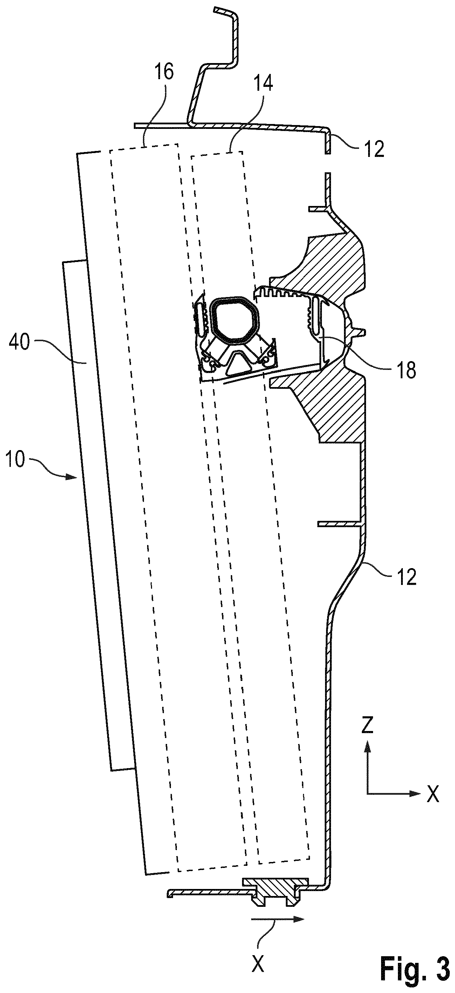

Das Wärmetauschermodul 10 ist derart um eine horizontale Achse schwenkbar gelagert, dass das Wärmetauschermodul 10 zwischen einer Gebrauchsposition, dargestellt in den Figuren 1 und 2, und einer Nichtgebrauchsposition, dargestellt in den Figuren 3 und 4, hin und her geschwenkt werden kann. Die horizontale Achse kann dabei die im gezeigten Beispiel parallel zur Fahrzeugquerrichtung Y orientiert sein.

Wie im gezeigten Beispiel kann die Verschwenkbarkeit des Wärmetauschermoduls 10 dadurch ermöglicht sein, dass das Wärmetauschermodul 10 oberhalb der horizontalen Achse mittels eines Modullagers 18 an dem Strukturelement 12 des Personenkraftwagens befestigt ist, das dazu ausgebildet ist, das Wärmetauschermodul 10 wahlweise in der Gebrauchsposition oder in er Nichtgebrauchsposition zu halten. Der Personenkraftwagen kann wie im gezeigten Beispiel zwei beidseits des Wärmetauschermoduls 10 angeordnete Modullager 18 aufweisen.

Wie im gezeigten Beispiel kann das Modullager 18 ein erstes Modullagerelement 20 und ein zweites Modullagerelement 22 aufweisen, wobei das zweite Modullagerelement 22 relativ zum ersten Modullagerelement 20 beweglich mit dem ersten Modullagerelement 20 verbunden ist. Wie im gezeigten Beispiel kann das erste Modullagerelement 20 an dem Wärmetauschermodul 10 und das zweite Modullagerelement 22 an dem Strukturelement 12 des Personenkraftwagens befestigt sein.

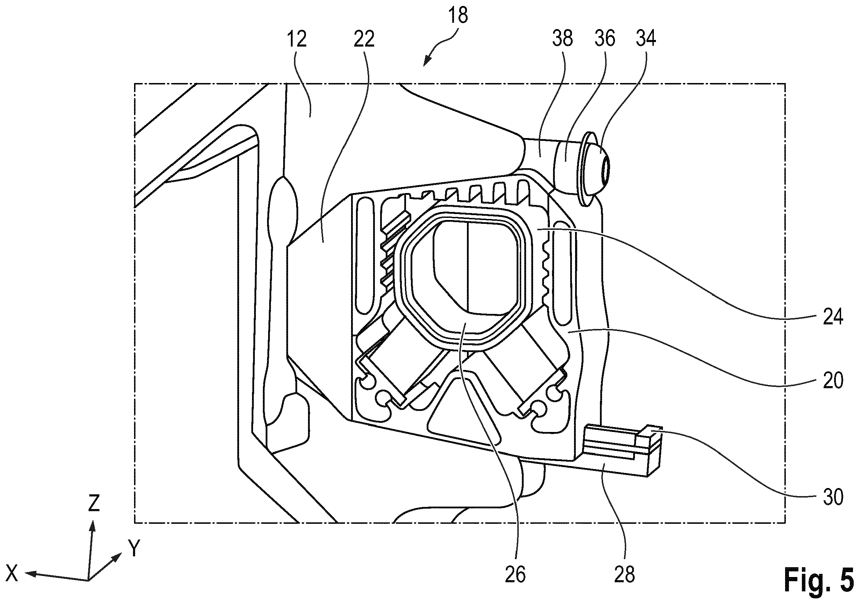

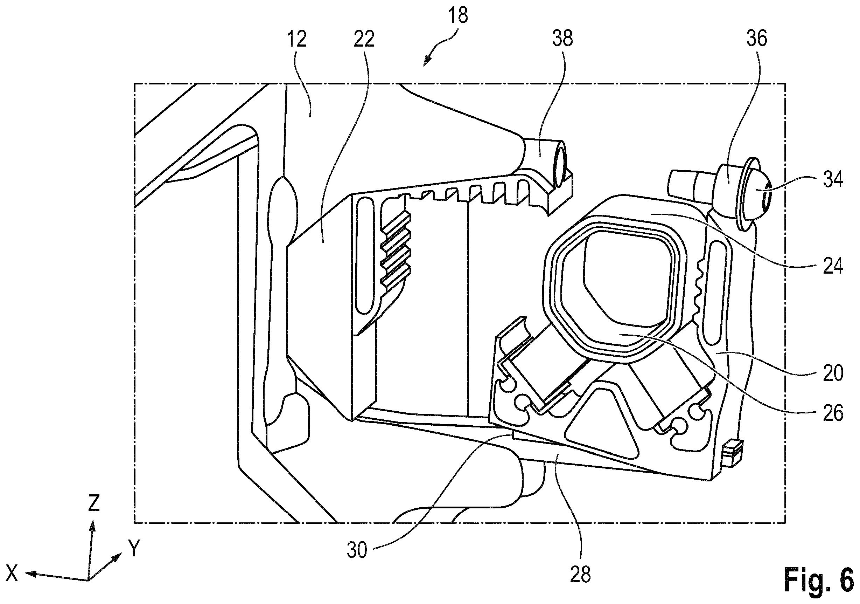

Das Modullager 18 ist insbesondere in den Figuren 5 und 6 im Detail dargestellt.

Das erste Modullagerelement 20 kann wie im gezeigten Beispiel eine Aufnahme 24 für ein Verbindungselement des Wärmetauschermoduls 10 aufweisen. Dabei kann es sich wie im gezeigten Beispiel um eine Aufnahme 24 für einen zapfenartig gestaltetes Verbindungselement handeln. Die Aufnahme 24 kann ein Entkopplungselement 26 aufweisen. Aufnahme 24 und Entkopplungselement 26 können einteilig, beispielsweise mittels eines Mehrkomponenten-Spritzgussverfahrens hergestellt sein.

Eines der Modullagerelemente 20, 22, kann - wie im gezeigten Beispiel das zweite Modullagerelement 22 - einen Schienenbereich 28 aufweisen, auf dem das andere Modullagerelement 20, 22 - im gezeigten Beispiel das erste Modullagerelement 20 - verschieblich gelagert ist. Beim Bewegen des Wärmetauschermoduls 10 zwischen seiner Gebrauchsposition und seiner Nichtgebrauchsposition bewegt sich dann im gezeigten Beispiel das erste Modullagerelement 20 mit dem Wärmetauschermodul 10, wodurch es auf dem Schienenbereich 28 zwischen der in der Figur 5 dargestellten Position, die der Gebrauchsposition entspricht, und der in der Figur 6 dargestellten Position, die der Nichtgebrauchsposition entspricht.

Eines der Modullagerelemente 20, 22 - im gezeigten Beispiel das zweite Modullagerelement 22 - kann einen Endanschlag 30 aufweisen, durch den die Nichtgebrauchsposition vorgegeben ist. Das andere Modullagerelement 20, 22 - im gezeigten Beispiel das erste Modullagerelement 20 - kann in der Nichtgebrauchsposition an dem Endanschlag 30, wie im gezeigten Darstellungsbeispiel aufgrund des Eigengewichts des Wärmetauschermoduls 10 anliegen. Der Endanschlag 30 kann insbesondere wie im gezeigten Beispiel an dem Schienenbereich 28 angeordnet sein.

Eines der Modullagerelemente 20, 22 - im gezeigten Beispiel das zweite Modullagerelement 22 - kann einen weiteren Endanschlag 32 aufweisen, durch den die Gebrauchsposition vorgegeben ist. Das andere Modullagerelement 20, 22 - im gezeigten Beispiel das erste Modullagerelement 20 - kann in der Gebrauchsposition an dem weiteren Endanschlag 32 anliegen. Der weitere Endanschlag 32 kann insbesondere wie im gezeigten Beispiel an dem Schienenbereich 28 angeordnet sein.

Eines der Modullagerelemente 20, 22 kann ein Fixierelement 34 aufweisen. Im gezeigten Beispiel weist das erste Modullagerelement 20 ein Fixierelement 34 auf. Das Fixierelement 34 kann wie im gezeigten Beispiel eine Schraube sein. Mittels des Fixierelements 34 kann das Modullagerelement 20 im gezeigten Beispiel an dem Modullagerelement 22 in einer festen Position relativ zu dem Modullagerelement 22 fixiert werden. Hierdurch wird das Wärmetauschermodul 10 in seiner Gebrauchsposition gesichert.

Im gezeigten Beispiel kann das Fixierelement 34 verliersicher ausgebildet sein. Wie beispielhaft dargestellt kann dies dadurch realisiert sein, dass sich eine Schraube drehbar in einem entsprechenden Aufnahmebereich 36 des entsprechenden Modullageelements 20, 22 - im gezeigten Beispiel das Modullagerelement 20 - aufgenommen ist.

Im gezeigten Beispiel ist das Fixierelement 34 derart ausgebildet, dass es in der Gebrauchsposition mit einem entsprechenden Gegenelement 38 in Eingriff gebracht werden kann. Bei dem Gegenelement 38 kann es sich wie im gezeigten Beispiel um einen Gewindebereich an dem entsprechenden Modullagerelement 20, 22 - im gezeigten Beispiel dem Modullagerelement 22 - handeln, in dem das als Schraube ausgebildete Fixierelement 34 eingeschraubt werden kann, wenn sich das Wärmetauschermodul 10 in der Gebrauchsposition befindet. Alternativ ist beispielsweise auch eine Gestaltung denkbar, in dem sich das Fixierelement 34 permanent im Eingriff mit dem Gegenelement 38 befindet. Beispielsweise könnte das Fixierelement 34 als eine Schraube ausgeführt sein, die lang genug bemessen ist, dass sich das Gewinde der Schraube auch in der Nichtgebrauchsposition immer noch im Eingriff mit dem Gewinde des Gegenelements 38 befindet.

Wie im gezeigten Beispiel umfasst das Wärmetauschermodul 10 eine Lüftereinheit 40. Das Wärmetauschermodul 10 ist derart ausgebildet sein, dass die Lüftereinheit 40 in einer zur flächigen Erstreckung des Wärmetauschermoduls 10, zumindest im Wesentlichen, parallelen Richtung orientierten Bewegung aus dem Wärmetauschermodul 10 entfernt werden kann. Dadurch wird es, wie im gezeigten Beispiel insbesondere in Figur 4 zu erkennen, ermöglicht, die Lüftereinheit 40 in der Nichtgebrauchsposition aus dem Personenkraftfahrzeug zu entfernen, auch wenn dies wie im gezeigten Beispiel in der Gebrauchsposition durch ein im Bewegungsweg angeordnetes Element des Personenkraftwagens verhindert ist. Bei dem im Bewegungsweg angeordneten Element kann es sich insbesondere um einen Teil des Strukturelements 12 handeln. Im gezeigten Beispiel verhindert ein oberer, sich in Fahrzeugquerrichtung Y erstreckender Bereich des Strukturelements 12, das Entfernen der Lüftereinheit 40 in der Gebrauchsposition in einer zur Fahrzeughochachse Z parallelen Bewegung. Durch das Verschwenken des Wärmetauschermoduls 10 in die Nichtgebrauchsposition kann, wie insbesondere in Figur 4 dargestellt, die Lüftereinheit 40 an dem im Bewegungsweg angeordneten Bereich des Strukturelements 12 vorbei aus dem Wärmetauschermodul 10 und damit aus dem Personenkraftwagen entfernt werden.

### Bezugszeichenliste

- 10: Wärmetauschermodul
- 12: Strukturelement
- 14: Wärmetauscher
- 16: Wärmetauscher
- 18: Modullager
- 20: erstes Modullagerelement
- 22: zweites Modullagerelement
- 24: Aufnahme
- 26: Entkopplungselement
- 28: Schienenbereich
- 30: Endanschlag
- 32: weiterer Endanschlag
- 34: Fixierelement
- 36: Aufnahmebereich
- 38: Gegenelement
- 40: Lüftereinheit

- X: Fahrzeuglängsrichtung
- Y: Fahrzeugquerrichtung
- Z: Fahrzeughochachse

## Patentansprüche

1. Personenkraftwagen mit einem Wärmetauschermodul (10), wobei das Wärmetauschermodul (10) wenigstens einen von einem Kühlmedium zur Kühlung eines Verbrennungsmotors des Personenkraftwagens durchströmbaren Wärmetauscher (14) umfasst, wobei das Wärmetauschermodul (10) derart um eine horizontale Achse schwenkbar gelagert ist, dass das Wärmetauschermodul (10) zwischen einer Gebrauchsposition und einer Nichtgebrauchsposition hin und her geschwenkt werden kann, **dadurch gekennzeichnet, dass** das Wärmetauschermodul (10) eine Lüftereinheit (40) umfasst, die in der Nichtgebrauchsposition in einer zur flächigen Erstreckung des Wärmetauschermoduls (10), zumindest im Wesentlichen, parallelen Richtung orientierten Bewegung aus dem Personenkraftfahrzeug entfernt werden kann, wobei ein Entfernen durch eine zur flächigen Erstreckung des Wärmetauschermoduls (10), zumindest im Wesentlichen, parallelen Richtung orientierten Bewegung in der Gebrauchsposition durch ein im Bewegungsweg angeordnetes Element des Kraftfahrzeugs verhindert ist.

2. Personenkraftwagen nach Anspruch 1, **dadurch gekennzeichnet, dass** das Wärmetauschermodul (10) oberhalb der horizontalen Achse mittels eines Modullagers (18) an einem Strukturelement (12) des Personenkraftwagens befestigt ist, wobei das Modullager (18) dazu ausgebildet ist, das Wärmetauschermodul (10) wahlweise in der Gebrauchsposition oder in der Nichtgebrauchsposition zu halten.

3. Personenkraftwagen nach Anspruch 1 oder 2, **dadurch gekennzeichnet, dass** das Modullager (18) ein erstes Modullagerelement (20) und ein relativ zum ersten Modullagerelement (20) beweglich mit dem ersten Modullagerelement (20) verbundenes zweites Modullagerelement (22) aufweist, wobei das erste Modullagerelement (20) an dem Wärmetauschermodul (10) und das zweite Modullagerelement (22) an einem Strukturelement (12) des Personenkraftwagens befestigt ist.

4. Personenkraftwagen nach Anspruch 2 oder 3, **dadurch gekennzeichnet, dass** es sich bei dem Strukturelement (12) um einen Montageträger handelt, der das Wärmetauschermodul (10) in dessen Gebrauchsposition rahmenartig umgibt.

5. Personenkraftwagen nach einem der vorigen Ansprüche, **dadurch gekennzeichnet, dass** es sich bei der Nichtgebrauchsposition um eine Wartungs- und/oder Montageposition handelt.

6. Personenkraftwagen nach einem der vorigen Ansprüche, **dadurch gekennzeichnet, dass** das Wärmetauschermodul (10) in seiner Nichtgebrauchsposition um einen Winkel von wenigstens 3° und/oder höchstens 10°, insbesondere entgegen der Fahrtrichtung des Personenkraftwagens bei Vorwärtsfahrt, gegenüber seiner Gebrauchsposition verschwenkt ist.

7. Personenkraftwagen nach einem der Ansprüche 3 bis 6, **dadurch gekennzeichnet, dass** eines der Modullagerelemente (20, 22) einen Endanschlag (30) aufweist, durch den die Nichtgebrauchsposition vorgegeben ist, insbesondere wobei das andere Modullagerelement (20, 22) in der Nichtgebrauchsposition an dem Endanschlag (30) aufgrund des Eigengewichts des Wärmetauschermoduls (10) anliegt.

8. Personenkraftwagen nach einem der Ansprüche 3 bis 7, **dadurch gekennzeichnet, dass** eines der Modullagerelemente (20, 22) einen, insbesondere gekrümmten, Schienenbereich (28) aufweist, auf dem das andere Modullagerelement (20, 22) verschieblich gelagert ist.

9. Personenkraftwagen nach einem der Ansprüche 3 bis 8, **dadurch gekennzeichnet, dass** eines der Modullagerelemente (20, 22) ein Fixierelement (34), insbesondere eine Schraube, umfasst, mit dem das Modullagerelement (20, 22) an dem anderen Modullagerelement (20, 22) in einer festen Position relativ zu dem anderen Modullagerelement (20, 22) fixiert werden kann, um das Wärmetauschermodul (10) in seiner Gebrauchsposition zu sichern.

## Claims

1. Passenger car having a heat exchanger module (10), the heat exchanger module (10) comprising at least one heat exchanger (14) through which a cooling medium can flow for cooling an internal combustion engine of the passenger car, the heat exchanger module (10) being pivotally mounted about a horizontal axis in such a way that the heat exchanger module (10) can be pivoted back and forth between a use position and a non-use position, **characterized in that** the heat exchanger module (10) comprises a fan unit (40) which, in the non-use position, can be removed from the passenger vehicle in a movement oriented at least substantially in parallel with the planar extent of the heat exchanger module (10), with removal by a movement oriented at least substantially in parallel with the planar extent of the heat exchanger module (10) being prevented in the use position by an element of the motor vehicle arranged in the path of movement.

2. Passenger car according to claim 1, **characterized in that** the heat exchanger module (10) is attached above the horizontal axis to a structural element (12) of the passenger car by means of a module bearing (18), the module bearing (18) being designed to hold the heat exchanger module (10) either in the use position or in the non-use position.

3. Passenger car according to claim 1 or 2, **characterized in that** the module bearing (18) comprises a first module bearing element (20) and a second module bearing element (22) which is connected to the first module bearing element (20) so as to be movable relative to the first module bearing element (20), the first module bearing element (20) being attached to the heat exchanger module (10) and the second module bearing element (22) being attached to a structural element (12) of the passenger car.

4. Passenger car according to claim 2 or 3, **characterized in that** the structural element (12) is a mounting support that surrounds the heat exchanger module (10) in its use position in a frame-like manner.

5. Passenger car according to any of the preceding claims,
**characterized in that** the non-use position is a maintenance and/or assembly position.

6. Passenger car according to any of the preceding claims,
**characterized in that** the heat exchanger module (10) is pivoted in its non-use position by an angle of at least 3° and/or at most 10°, in particular against the direction of travel of the passenger car when driving forward, relative to its use position.

7. Passenger car according to any of claims 3 to 6, **characterized in that** one of the module bearing elements (20, 22) has an end stop (30) by which the non-use position is defined, in particular the other module bearing element (20, 22) abutting the end stop (30) in the non-use position due to the own weight of the heat exchanger module (10).

8. Passenger car according to any of claims 3 to 7, **characterized in that** one of the module bearing elements (20, 22) has an, in particular curved, rail region (28) on which the other module bearing element (20, 22) is slidably mounted.

9. Passenger car according to any of claims 3 to 8, **characterized in that** one of the module bearing elements (20, 22) comprises a fixing element (34), in particular a screw, using which the module bearing element (20, 22) can be fixed to the other module bearing element (20, 22) in a fixed position relative to the other module bearing element (20, 22) in order to secure the heat exchanger module (10) in its use position.

## Revendications

1. Véhicule automobile particulier comportant un module échangeur de chaleur (10), dans lequel le module échangeur de chaleur (10) comprend au moins un échangeur de chaleur (14) pouvant être traversé par un fluide de refroidissement destiné au refroidissement d'un moteur à combustion interne du véhicule automobile particulier, dans lequel le module échangeur de chaleur (10) est monté de manière à pouvoir pivoter autour d'un axe horizontal de telle sorte que le module échangeur de chaleur (10) peut pivoter en va-et-vient entre une position d'utilisation et une position de non-utilisation, **caractérisé en ce que** le module échangeur de chaleur (10) comprend une unité de ventilation (40) qui, dans la position de non-utilisation, peut être retirée du véhicule automobile particulier selon un mouvement orienté dans une direction au moins sensiblement parallèle à l'extension plane du module échangeur de chaleur (10), dans lequel un retrait est empêché, dans la position d'utilisation, par un élément du véhicule automobile disposé dans un trajet de mouvement par un mouvement orienté dans une direction au moins sensiblement parallèle à l'extension plane du module échangeur de chaleur (10).

2. Véhicule automobile particulier selon la revendication 1,
**caractérisé en ce que** le module échangeur de chaleur (10) est fixé au-dessus de l'axe horizontal à un élément structurel (12) du véhicule automobile particulier au moyen d'un palier de module (18), dans lequel le palier de module (18) est conçu pour maintenir le module échangeur de chaleur (10) au choix dans la position d'utilisation ou dans la position de non-utilisation.

3. Véhicule automobile particulier selon la revendication 1 ou 2,
**caractérisé en ce que** le palier de module (18) présente un premier élément de palier de module (20) et un second élément de palier de module (22) relié au premier élément de palier de module (20) et mobile par rapport au premier élément de palier de module (20), dans lequel le premier élément de palier de module (20) est fixé au module échangeur de chaleur (10) et le second élément de palier de module (22) est fixé à un élément structurel (12) du véhicule automobile particulier.

4. Véhicule automobile particulier selon la revendication 2 ou 3,
**caractérisé en ce que** l'élément structurel (12) est un support de montage qui entoure le module échangeur de chaleur (10) à la manière d'un cadre dans sa position d'utilisation.

5. Véhicule automobile particulier selon l'une des revendications précédentes, **caractérisé en ce que** la position de non-utilisation est une position d'entretien et/ou de montage.

6. Véhicule automobile particulier selon l'une des revendications précédentes, **caractérisé en ce que** le module échangeur de chaleur (10), dans sa position de non-utilisation, est pivoté d'un angle d'au moins 3° et/ou d'au plus 10°, en particulier dans le sens opposé au sens de marche du véhicule automobile particulier lors d'un déplacement vers l'avant, par rapport à sa position d'utilisation.

7. Véhicule automobile particulier selon l'une des revendications 3 à 6, **caractérisé en ce que** l'un des éléments de palier de module (20, 22) présente une butée d'extrémité (30) qui définit la position de non-utilisation, dans lequel, en particulier, l'autre élément de palier de module (20, 22) repose contre la butée d'extrémité (30) dans la position de non-utilisation sous l'effet du poids propre du module échangeur de chaleur (10).

8. Véhicule automobile particulier selon l'une des revendications 3 à 7, **caractérisé en ce que** l'un des éléments de palier de module (20, 22) présente une zone de rail (28), en particulier courbe, sur laquelle l'autre élément de palier de module (20, 22) est monté de manière à pouvoir coulisser.

9. Véhicule automobile particulier selon l'une des revendications 3 à 8, **caractérisé en ce que** l'un des éléments de palier de module (20, 22) comprend un élément de fixation (34), en particulier une vis, au moyen duquel l'élément de palier de module (20, 22) peut être fixé à l'autre élément de palier de module (20, 22) dans une position fixe par rapport à l'autre élément de palier de module (20, 22), afin de maintenir le module échangeur de chaleur (10) dans sa position d'utilisation.
